(19) **Europäisches Patentamt European Patent Office Office européen des brevets**

(11) **EP 4 324 971 A1**

(12) **EUROPEAN PATENT APPLICATION**
published in accordance with Art. 153(4) EPC

(43) Date of publication:
**21.02.2024 Bulletin 2024/08**

(21) Application number: **22788111.7**

(22) Date of filing: **06.04.2022**

(51) International Patent Classification (IPC):
**D04H 3/16** *(2006.01)* **H01B 1/06** *(2006.01)*
**H01M 10/0562** *(2010.01)*

(52) Cooperative Patent Classification (CPC):
**D04H 3/16; H01B 1/06; H01M 10/0562;** Y02E 60/10

(86) International application number:
**PCT/JP2022/017200**

(87) International publication number:
**WO 2022/220186 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2021 JP 2021069044**

(71) Applicant: **Asahi Kasei Kabushiki Kaisha Tokyo 1000006 (JP)**

(72) Inventors:
• **KUSAKABE, Junichi Tokyo 100-0006 (JP)**

• **KOMATSU, Takashi Tokyo 100-0006 (JP)**
• **SHIOTA, Eiji Tokyo 100-0006 (JP)**
• **SAKURABA, Maiko Tokyo 100-0006 (JP)**
• **FUKUNAGA, Akihisa Tokyo 100-0006 (JP)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(54) **SOLID ELECTROLYTE SUPPORT AND SOLID ELECTROLYTE SHEET INCLUDING SAME**

(57) Provided are a solid electrolyte support suitable for obtaining a solid electrolyte sheet having low electrical resistance, and a solid electrolyte sheet including the same. The present invention relates to: a solid electrolyte support that contains a non-woven fabric and is charac- terized in that the elastic recovery rate of the support is 30-99%; and a solid electrolyte sheet that includes the solid electrolyte support and a solid electrolyte, and has low electrical resistance.

EP 4 324 971 A1

**Description**

FIELD

The present invention relates to a solid electrolyte support and to a solid electrolyte sheet including it.

BACKGROUND

The development of portable devices and implementation of electric vehicles in recent years has increased the need for batteries of smaller size, lighter weight, higher capacity and higher energy density.

Lithium ion secondary batteries developed for this purpose, constructed with a positive electrode active material, a negative electrode active material and an electrolyte solution, continue to undergo further development with the goal of achieving enhanced functionality, and greater improvements including longer life, higher capacity and higher energy density. Many are mounted in products directly influential on human life, such as automobiles, and must therefore exhibit safety and reliability in addition to the enhanced battery functionality mentioned above.

All-solid-state batteries are currently the target of intense focus. Because organic electrolyte solutions are used as electrolytes in conventional lithium ion secondary batteries, there is a risk of ignition due to internal short circuiting caused by overcharge or overdischarge, while fluid leakage is another frequent problem. All-solid-state batteries, on the other hand, use solid electrolytes and are therefore highly superior in terms of safety and reliability. Sulfide- and oxide-based inorganic electrolytes, as well as polymer-based organic electrolytes, are commonly used as solid electrolytes.

In order to achieve higher energy density and higher capacity, as the properties required for batteries, it has been a goal to realize smaller thicknesses and higher ion conduction for solid electrolytes, as well as to improve their strength for better handleability. Support electrolytes having a solid electrolyte coated on a support are used for this purpose, and they often employ fibrous sheets such as nonwoven fabrics as supports.

PTL 1 discloses a solid electrolyte sheet comprising an aromatic liquid crystal polyester nonwoven fabric, the aromatic liquid crystal polyester nonwoven fabric having a high porosity that are to be filled with the polymer solid electrolyte.

PTL 2 discloses a solid electrolyte sheet wherein the support is a porous base material made of a fibrous material.

PTL 3 discloses a solid electrolyte sheet wherein the support is a nonwoven fabric having a basis weight and thickness in specified ranges.

[CITATION LIST]

[PATENT LITERATURE]

    [PTL 1] Japanese Unexamined Patent Publication No. 2006-190627
    [PTL 2] International Patent Publication No. 2020-054081
    [PTL 3] Japanese Unexamined Patent Publication No. 2016-31789

SUMMARY

[TECHNICAL PROBLEM]

However, PTLs 1 to 3 do not adequately consider the flexibility of the electrolyte sheet interface, and have been associated with the problem of increased electrical resistance due to insufficient follow properties or contact conditions for the electrolyte sheet at the electrode interface.

In light of these issues, the problem to be solved by the invention is to provide a solid electrolyte support suitable for obtaining an electrolyte sheet with low electrical resistance, as well as a solid electrolyte sheet that includes it.

[SOLUTION TO PROBLEM]

As a result of diligent experimentation with the aim of solving this problem, the present inventors have found, unexpectedly, that the problem can be solved by the following construction, and the invention has been completed upon this finding.

Specifically, the present invention provides the following.

[1] A solid electrolyte support that includes a nonwoven fabric, wherein the elastic recovery rate of the support is 30 to 99%.

[2] The solid electrolyte support according to [1] above, wherein the porosity of the support is 30 to 95%.

[3] The solid electrolyte support according to [1] or [2] above, wherein the compressibility ratio of the support is 0.1 to 40%.

[4] The solid electrolyte support according to any one of [1] to [3] above, wherein the nonwoven fabric includes synthetic fibers.

[5] The solid electrolyte support according to [4] above, wherein the synthetic fibers are polyester.

[6] The solid electrolyte support according to any one of [1] to [5] above, wherein the thickness of the support under a load of 100 g/m$^2$ is 5 to 200 $\mu$m.

[7] The solid electrolyte support according to any one of [1] to [6] above, wherein the nonwoven fabric includes fibers with fiber lengths of 51 mm or greater.

[8] The solid electrolyte support according to any one of [1] to [7] above, wherein the basis weight of the support is 5 to 50 g/m$^2$.

[9] The solid electrolyte support according to any one of [1] to [8] above, wherein the nonwoven fabric includes ultrafine fibers with fiber diameters of 0.1 to 5.0 $\mu$m.

[10] The solid electrolyte support according to any one of [1] to [9] above, wherein the nonwoven fabric includes a layer containing ultrafine fibers with fiber diameters of 0.1 to 5.0 $\mu$m and a layer containing fibers with fiber diameters of greater than 5.0 $\mu$m and 30 $\mu$m or smaller.

[11] The solid electrolyte support according to [10] above, wherein the nonwoven fabric includes one layer containing ultrafine fibers with fiber diameters of 0.1 to 5.0 $\mu$m (layer I) and one layer containing fibers with fiber diameters of greater than 5.0 $\mu$m and 30 $\mu$m or smaller (layer II).

[12] The solid electrolyte support according to any one of [1] to [11] above, wherein the nonwoven fabric is thermally bonded over the entire surface.

[13] The solid electrolyte support according to any one of [1] to [12] above, wherein the nonwoven fabric includes a layer containing ultrafine fibers with fiber diameters of 0.1 to 5.0 $\mu$m (layer I) and a layer containing fibers with fiber diameters of greater than 5.0 $\mu$m and 30 $\mu$m or smaller (layer II), the elastic recovery rate of the support is 45 to 99%, and the compressibility ratio of the support is 0.1 to 9.7%.

[14] A solid electrolyte sheet which includes a solid electrolyte support according to any one of [1] to [13] above and a solid electrolyte.

[15] The solid electrolyte sheet according to [14] above, wherein the electrical conductivity of the solid electrolyte sheet is $1.0 \times 10^{-5}$ to $5.0 \times 10^{-1}$ s/m.

[ADVANTAGEOUS EFFECTS OF INVENTION]

The solid electrolyte support of the invention is suitable for obtaining an electrolyte sheet with low electrical resistance. The solid electrolyte sheet of the invention also has low electrical resistance.

DESCRIPTION OF EMBODIMENTS

The invention will now be explained in detail using an embodiment.

One embodiment of the invention is a solid electrolyte support that includes a nonwoven fabric, wherein the elastic recovery rate of the support is 30 to 99%.

The solid electrolyte support of the embodiment (hereunder also referred to simply as "support") includes a nonwoven fabric. The type of nonwoven fabric is not particularly restricted, and a spunbonded nonwoven fabric or melt-blown nonwoven fabric may be used, for example.

The elastic recovery rate of the support of the embodiment is 30 to 99%, preferably 45% or greater and more preferably 50% or greater, and preferably 98% or lower and more preferably 97% or lower. The elastic recovery rate significantly affects the follow property of the electrolyte sheet at the electrode interface. Specifically, a higher elastic recovery rate causes the sheet to follow the electrode interface, lowering the electrical resistance between the electrolyte sheet surface and the electrode.

The porosity of the support of the embodiment is preferably 30 to 95%, more preferably 35 to 90% and even more preferably 40 to 85%. A porosity of 30% or greater will allow greater retention of the solid electrolyte, resulting in sufficient contact between the solid electrolyte and lower electrical resistance in the sheet interior. A porosity of 95% or lower, on the other hand, can ensure strength for the support and can reduce short circuiting during electrode reaction with the active material.

The compressibility ratio of the support of the embodiment is preferably 0.1% or greater, more preferably 0.5% or greater and even more preferably 1% or greater, and preferably 40% or lower, more preferably 35% or lower, even more preferably 30% or lower and most preferably 9.7% or lower. Press molding is a part of the process of fabricating the electrolyte sheet, and a higher compressibility ratio of the support contributes to formation of a thinner sheet. A higher compressibility ratio allows the sheet interior to be filled with more solid electrolyte, increasing the contact area between the electrolytes and lowering the electrical resistance. A higher compressibility ratio also increases the flexibility of the electrolyte sheet, and allows the interface on the electrolyte sheet side to follow the electrode surface with expansion and contraction of the electrode surface during electrode reaction, thus lowering the contact resistance. If the compressibility ratio is 40% or lower, the solid electrolyte will be able to sufficiently fill the electrolyte sheet during its formation by press molding.

The nonwoven fabric in the support of the embodiment preferably includes synthetic fibers. Synthetic fibers are chemically stable and allow a quality electrolyte sheet to be easily obtained. The material of the synthetic fibers may be a polyolefin such as polypropylene or polyethylene, or polystyrene, polyphenylene sulfide, aramid, polyamideimide, polyimide, nylon or a polyester such as polyethylene terephthalate (PET), with polyesters being particularly preferred. A polyester has higher heat resistance than other resins, and therefore a support including a nonwoven fabric comprising it exhibits excellent dimensional stability. Polyesters also fail to undergo reaction such as corrosion even when contacting with solid electrolytes such as sulfides, or lithium metal, and are thus chemically stable. In addition, polyesters exhibit electrical insulating properties which are associated with preventing short circuiting of electrode active materials.

The support of the embodiment has a thickness under 100 g/m$^2$ load of preferably 5 to 200 $\mu$m, more preferably 7 $\mu$m to 180 $\mu$m and even more preferably 10 to 150 $\mu$m. If the thickness under 100 g/m$^2$ load is 5 $\mu$m or greater, the tensile strength will tend to be higher and the coating handleability will be satisfactory. If the thickness under 100 g/m$^2$ load is 200 $\mu$m or lower, on the other hand, the thickness after press molding will be reduced, lowering the electrical resistance value of the electrolyte sheet.

The nonwoven fabric in the support of the embodiment includes fibers with fiber lengths of preferably 51 mm or greater, more preferably 100 mm or greater and even more preferably 150 mm or greater. If the fiber lengths are 51 mm or greater, the tensile characteristics, tear property and piercing property required for the support will be superior. If the fiber lengths are 51 mm or greater there will also be less shedding of fibers, making it easier to fabricate an electrolyte sheet with excellent form retention.

The basis weight of the support of the embodiment is preferably 5 to 50 g/m$^2$, more preferably 8 to 40 g/m$^2$ and even more preferably 10 to 30 g/m$^2$. If the basis weight is 5 g/m$^2$ or greater, the handleability during the coating step will be satisfactory, and if it is 50 g/m$^2$ or lower the support will be sufficiently thin after press molding, helping to lower the electrical resistance of the electrolyte sheet.

The apparent density of the support of the embodiment is preferably 0.069 to 0.97 g/cm$^3$, more preferably 0.13 to 0.90 g/cm$^3$ and even more preferably 0.21 to 0.83 g/cm$^3$. If the apparent density is 0.69 g/cm$^3$ or greater, the strength of the support can be ensured and short circuiting during electrode reaction with the active material can be reduced. If the apparent density is 0.97 g/cm$^3$ or lower, on the other hand, retention of the solid electrolyte will be greater, resulting in sufficient contact between the solid electrolyte and lower electrical resistance in the sheet interior.

The nonwoven fabric in the support of the embodiment preferably includes an ultrafine fiber layer with fiber diameters of 0.1 to 5 $\mu$m. By including an ultrafine fiber layer it will be easier to form an electrolyte sheet with the solid electrolyte disposed more uniformly, and to lower the electrical resistance. Moreover, including an ultrafine fiber layer will inhibit strikethrough during coating of the solid electrolyte, and will allow a quality electrolyte sheet without pinholes or defects in the electrolyte sheet to be easily obtained. The fiber diameters in the ultrafine fiber layer are also preferably 0.1 $\mu$m or greater since the fiber strength will be sufficiently high, ensuring strength for the support. If the fiber diameters in the ultrafine fiber layer are 5 $\mu$m or smaller, on the other hand, the interfiber distances will be more uniform and it will be easier to form an electrolyte sheet with the solid electrolyte disposed more uniformly. From this viewpoint, the fiber diameters in the ultrafine fiber layer are preferably 0.3 to 4.0 $\mu$m and more preferably 0.5 to 3.0 $\mu$m.

The nonwoven fabric in the support of the embodiment is preferably composed of at least two layers including an ultrafine fiber layer with fiber diameters of 0.1 to 5 $\mu$m (layer I) and a fiber layer with fiber diameters of greater than 5 $\mu$m and 30 $\mu$m or smaller (layer II). In this case, layer I serves as the functional layer and layer II serves as a strength layer. If the layered nonwoven fabric has at least two layers as a combination of layer I and layer II, then it will be possible to form a network-like nonwoven fabric structure which is more dense than when using each layer alone as supports, thereby resulting in more uniform filling of the electrolyte and lower electrical resistance for use as an electrolyte sheet. The layered structure is preferably a two-layer structure with layer I-layer II, a three-layer structure with layer I-layer II-layer I, a three-layer structure with layer II-layer I-layer II (that is, a three-layer structure with layer I disposed as an intermediate layer between two layers of layer II), or a 4-layer structure of layer I-layer II-layer II-layer I.

The method for producing the nonwoven fabric in the support of the embodiment is not restricted. When layer II is provided, however, the method is preferably a spunbond method, dry method or wet method. When layer I is provided, the method is preferably a dry method or wet method, an electrospinning method, a melt-blown method or a force spinning method, using ultrafine fibers. Layer I is preferably formed by a melt-blown method from the viewpoint of allowing the ultrafine fiber layer to be formed easily and densely. The fibers forming layer I may also be used for production of the nonwoven fabric after having been split or fibrillated by beating or partial dissolution.

As a method of integration of an unbonded web or a method of forming a layered nonwoven fabric comprising layer I and layer II, there may be mentioned a method of integration by thermal bonding, a method of three-dimensional interlacing by spraying of a high-speed water stream, or a method of integration using a particulate or fibrous bonding agent. Integration by thermal bonding is preferred from the viewpoint of forming a layered nonwoven fabric without using a binder. Methods of integration by thermal bonding include integration by heat embossing (with a hot embossing roll system) and integration by high-temperature hot air (with an airthrough system).

Integration by thermal bonding can be carried out, for example, as thermal bonding using a press roll (flat roll or embossing roll) at a temperature of 50 to 120°C lower than the melting point of the synthetic resin and a linear pressure of 100 to 1000 N/cm. From the viewpoint of reducing the thickness and lowering the electrical resistance value of the electrolyte sheet, the nonwoven fabric is preferably thermally bonded over the entire surface by thermal bonding using a flat roll. As used herein, the phrase "thermally bonded over the entire surface" means that the thermal bonding is over the entire surface of the nonwoven fabric, unlike partial thermal bonding (point bonding) in which portions of the nonwoven fabric are thermally bonded. If the linear pressure is 100 N/cm or greater in the thermal bonding step it will be easier to obtain sufficient bonding with adequate strength exhibited. If the linear pressure is 1000 N/cm or lower, there will be less deformation of the fibers, the apparent density will be lower and the porosity will be higher, so that the desired effect will be more easily obtained.

Integration by thermal bonding also makes it possible to control the fabric temperature before pressing when entering into the press roll during the thermal bonding step, to allow subsequent control of the compaction property of the nonwoven fabric. The fabric temperature before pressing is the temperature of the nonwoven fabric (web) 50 cm upstream from the roll nip point. For a polyester material, for example, if the fabric temperature before pressing is set within a range of 40 to 120°C, it will be possible to obtain an elastic recovery rate and compressibility ratio within the range specified above. By setting a high fabric temperature before pressing it is possible to promote crystallinity of the thread beforehand, thereby ensuring the minimum amorphous amount necessary for bonding between the fibers, while also inhibiting over-compression and resulting in a support with a high elastic recovery rate. The method of adjusting the fabric temperature before pressing to the range of 40 to 120°C is not particularly restricted and may be a method of effectively using heat dissipation from the hot press roll with an insulation plate, or a method of preheating the nonwoven fabric with a preheating roll.

Another embodiment of the invention is a solid electrolyte sheet that includes the aforementioned solid electrolyte support and a solid electrolyte.

A solid electrolyte sheet including the support of this embodiment and a solid electrolyte will now be described.

The electrical conductivity of the solid electrolyte sheet including the support of the embodiment and a solid electrolyte is preferably $1.0 \times 10^{-5}$ to $5.0 \times 10^{-1}$ s/m, more preferably $5.0 \times 10^{-5}$ to $1.0 \times 10^{-1}$ s/m and even more preferably $1.0 \times 10^{-4}$ to $5.0 \times 10^{-2}$ s/m.

The solid electrolyte to be used in combination with the support of the embodiment is not particularly restricted so long as it has lithium ion conductivity, and it may be an inorganic solid electrolyte such as a solid sulfide electrolyte or solid oxide electrolyte, or a polymer-based solid electrolyte, for example. Examples of sulfide-based solid electrolytes that may be used include $Li_2S$-$P_2S_5$, $Li_2S$-Si, $Li_2S$-$P_2S_5$-$GeS_2$ and $Li_2S$-$B_2S_3$-based glass, as well as $Li_{10}GeP_2S_{12}$ (LGPS) and $Li_6PS_5Cl$ (argyrodites). Particularly preferred among these are argyrodite-based materials because of their high lithium ion conductivity and high chemical stability. Examples of oxide-based solid electrolytes include $Li_7La_3Zr_2O_{12}$, $LiTi_2Z (PO_4)_3$, $LiGeO_2(PO_4)_3$ and $LiLaTiO_3$.

When the solid electrolyte is to be coated onto the support of the embodiment, the solid electrolyte may be coated in the form of a slurry. The slurry used for coating can be prepared by loading and mixing solid electrolyte particles and a binder in a solvent. The slurry solvent is preferably selected as one that is unlikely to degrade the solid electrolyte, with preferred examples including non-polar aprotic solvents, which are typically hydrocarbon solvents such as hexane, heptane, octane, nonane, decane, decalin, toluene and xylene, and more preferably super dehydrated solvents having a water content of 0.001 mass% (10 ppm) or lower. After filling the slurry into the pores of the support, it is dried to remove the solvent of the slurry.

After coating of the slurry and drying of the solvent, the composite of the support and solid electrolyte is press molded. The conditions for press molding may be a pressure of 5 to 50 MPa, a temperature of 50 to 200°C and a pressing time of 1 to 30 minutes, for example.

EXAMPLES

The present invention will now be described in greater detail by Examples and Comparative Examples, with the understanding that the invention is not limited to the Examples. Unless otherwise specified, the lengthwise direction of the nonwoven fabric is the MD (machine direction), and the cross-machine direction is the direction perpendicular to the lengthwise direction within the plane of the nonwoven fabric.

(1) Basis weight (g/m$^2$)

Following the method of JIS L-1906, using a 20 cm length × 25 cm width test piece, a total of nine locations were sampled per 1 m × 1 m, at 3 locations per 1 m in the sample width direction and 3 locations per 1 m in the lengthwise direction, the masses were measured, and the average value was converted to mass per unit area, to determine the basis weight.

(2) Thickness (μm)

Following the method of JIS L-1906, the thickness was measured at 10 locations per 1 m width of the test piece under conditions with a load of 9.8 kPa, and the average value was calculated.

(3) Apparent density (g/cm$^3$)

The basis weight (g/m$^2$) measured in (1) above and the thickness (μm) measured in (2) above were used for calculation of the apparent density by the following formula with adjusted units:

$$\text{Apparent density} = (\text{Basis weight})/(\text{thickness}).$$

(4) Porosity (%)

The apparent density (g/cm$^3$) calculated in (3) above was used for calculation of the porosity by the following formula:

$$\text{Porosity} = \{1 - (\text{Apparent density})/(\text{resin density})\}/100.$$

(5) Fiber diameter (μm)

A nonwoven fabric was cut to 10 cm × 10 cm and vertically pressed on a steel plate at 60°C, at a pressure of 0.30 MPa for 90 seconds, and then vapor deposited with platinum. An SEM apparatus (JSM-6510, product of JEOL Corp.) was used for photography of the platinumvapor-deposited nonwoven fabric under conditions with an acceleration voltage of 15 kV and a working distance of 21 mm. The photograph magnification was 10,000x for filaments with mean fiber diameters of less than 0.5 μm, 6000x for filaments with mean fiber diameters of 0.5 μm or greater and less than 1.5 μm, and 4000x for filaments of 1.5 μm or greater. The visual field at each photographing magnification was 12.7 μm × 9.3 μm for 10,000x, 21.1 μm × 15.9 μm for 6000x and 31.7 μm × 23.9 μm for 4000x. A photograph was taken of 100 random fibers, and all of their fiber diameters were photographed. Fibers fused together in the yarn length direction were excluded from the measurement, however. The weight-average mean fiber diameter (Dw), determined by the following formula:

$$\text{Dw} = \Sigma\text{Wi} \cdot \text{Di} = \Sigma(\text{Ni} \cdot \text{Di}^2)/(\text{Ni} \cdot \text{Di})$$

{where Wi = weight percentage of fiber diameter Di = Ni · Di/ΣNi · Di and Ni is the number of fibers with fiber diameter Di} was recorded as the mean fiber diameter (μm).

(6) Tensile strength (N/15 mm)

A 10 cm portion was removed from each end of the sample (nonwoven fabric or support), and five test pieces were cut out from a 1 m width, each with a size of 15 mm width × 20 cm length. A load was applied until the test piece fractured, and the average value of the strength of the test piece at maximum load in the MD was calculated.

(7) Elastic recovery rate and compressibility ratio

An MCT-50 microcompression tester by Shimadzu Corp. was used to measure the elastic recovery rate and compressibility ratio. As the test conditions, a load was applied to the sample up to the maximum test force, and then measurement was conducted in load-unload mode with unloading up to the minimum test force. The minimum test force was 0.05 mN and the maximum test force was the test force at 10% deformation in compression mode. The elastic recovery rate and compressibility ratio were calculated in the following manner.

$$\text{Elastic recovery rate (Rr)} = \{L2/(L1 - L2)\} \times 100$$

$$\text{Compressibility ratio (Cr)} = (L1/d) \times 100$$

d: Nonwoven fabric (support) thickness

L1: Displacement difference during maximum test force and minimum test force in load mode

L2: Displacement difference during maximum test force and minimum test force in unload mode

(8) Measurement of electrical resistance (electrical conductivity (S/m))

The measuring apparatus used was a Digital Super Megohmmeter by Hioki and a flat sample measuring electrode SME-8311 by Hioki. A 100 mm × 100 mm test piece (solid electrolyte sheet) was prepared, and the electrical conductivity was measured under conditions with a voltage of 10 V and a measuring time of 60 seconds.

The solid electrolyte sheet used for measurement was fabricated in the following manner. A xylene solution of SBR (electrolyte binder) was added to amorphous powder of $Li_2S$-$P_2S_5$ (80:20 mol%), as a sulfide electrolyte, to 1% SBR with respect to the mass of the amorphous powder, to prepare a mixture. A xylene solution of NBR (electrolyte layer binder) was then added to the mixture to 0.5% NBR with respect to the amorphous powder, and dehydrated xylene was added in a sufficient amount to adjust the viscosity. The mixture was loaded into a kneading vessel, zirconia balls were loaded in to 1/3 of the kneading vessel, and an electrolyte slurry was prepared by stirring for 5 minutes at 3000 rpm. The support was immersed in the electrolyte slurry and nipped with a roll press, and then smoothed with a blade to obtain a composite with the slurry thoroughly permeating the support interior. The composite was dried with a hot air drier to fabricate an electrolyte sheet.

[Examples 1 to 7 and 12]

As a fiber layer with fiber diameters of greater than 5 $\mu$m and 30 $\mu$m or smaller (layer II), a polyethylene terephthalate (PET) resin was discharged from a spunbond spinning nozzle (V-shaped nozzle) at a spinning temperature of 290°C, symmetrically cooling the yarn from both sides with a cooling device set directly under the spinneret (wind speed: 0.5 m/s for both sides), and drawing it with a draw jet to obtain a continuous long filament (diameter: 15 $\mu$m), the filament then being opened, dispersed and accumulated on a web conveyor to form a web. Next, as the ultrafine fiber layer (layer I), a PET resin was used for spinning by a melt-blown method under conditions with a spinning temperature of 290°C, and blowing onto the web. During this step, the distance from the melt blown nozzle to the web was 300 mm, with the suction force set to 0.2 kPa and the wind speed set to 7 m/sec at the collecting surface directly under the melt blown nozzle. A continuous long filament (diameter: 15 $\mu$m) prepared by the same spunbond method described above was accumulated over the web to obtain a layered web. The layered web was integrated using a press roll (calender roll), while adjusting the calender linear pressure and temperature as shown in Table 1 to fabricate a nonwoven fabric of the desired thickness, for use as a support. The fabric temperature before calendering, which is important for controlling the compaction property, was adjusted to 50, 70 or 90°C by the position of the insulation plate of the heated roll.

[Example 8]

A nonwoven fabric was fabricated in the same manner as Example 1, except for using a polyphenylene sulfide (PPS) resin as the starting material and adjusting the spinning temperature, calender temperature, fabric temperature, thickness and apparent density to values as shown in Table 1, and the fabric was used as a support.

[Example 9]

PET resin staple fibers having a fiber diameter of 4 $\mu$m and a fiber length of 5 mm, as shown in Table 1, were trapped on a net at 20 g/m² by a papermaking method, and after dewatering and drying, they were contact bonded using a flat roll, without causing dispersion of the fibers, to obtain a staple fiber nonwoven fabric. During contact bonding, the calender temperature and fabric temperature were appropriately adjusted for calendering to obtain the desired thickness, porosity and compaction property.

[Example 10]

As a fiber layer with fiber diameters of greater than 5 $\mu$m and 30 $\mu$m or smaller (layer II), a PET resin was discharged from a spunbond spinning nozzle (V-shaped nozzle) at a spinning temperature of 290°C, symmetrically cooling the yarn from both sides with a cooling device set directly under the spinneret (wind speed: 0.5 m/s for both sides), and drawing it with a draw jet to obtain a continuous long filament (diameter: 15 $\mu$m), the filament then being opened, dispersed and accumulated on a web conveyor to form a web. The web was then integrated using a calender roll, as shown in Table 1, with adjustment of the calender linear pressure, to fabricate a nonwoven fabric of the desired thickness, for use as a support. The fabric temperature before calendering was adjusted to 70°C.

[Example 11]

As an ultrafine fiber nonwoven fabric layer (layer I), a PET resin was used for spinning by a melt-blown method under conditions with a spinning temperature of 290°C, and the fibers were accumulated on a web conveyor. During this step, the distance from the melt blown nozzle to the web was 300 mm, with the suction force set to 0.2 kPa and the wind speed set to 7 m/sec at the collecting surface directly under the melt blown nozzle. The web was then integrated using a calender roll, as shown in Table 1, with adjustment of the calender linear pressure, to fabricate a nonwoven fabric of the desired thickness, for use as a support. The fabric temperature before calendering was adjusted to 70°C.

[Example 13]

In the same manner as Example 1, as a fiber layer with fiber diameters of greater than 5 $\mu$m and 30 $\mu$m or smaller (layer II), a polyethylene terephthalate (PET) resin was discharged from a spunbond spinning nozzle (V-shaped nozzle) at a spinning temperature of 290°C, symmetrically cooling the yarn from both sides with a cooling device set directly under the spinneret (wind speed: 0.5 m/s for both sides), and drawing it with a draw jet to obtain a continuous long filament (diameter: 15 $\mu$m), the filament then being opened, dispersed and accumulated on a web conveyor to form a web. Next, as the ultrafine fiber layer (layer I), a PET resin was used for spinning by a melt-blown method under conditions with a spinning temperature of 290°C, and blowing onto the web. During this step, the distance from the melt blown nozzle to the web was 300 mm, with the suction force set to 0.2 kPa and the wind speed set to 7 m/sec at the collecting surface directly under the melt blown nozzle. The layered web was integrated using a press roll (calender roll), while adjusting the calender linear pressure and temperature as shown in Table 1 to fabricate a nonwoven fabric of the desired thickness, for use as a support. The fabric temperature before calendering, which is important for controlling the compaction property, was adjusted to 70°C by the position of the insulation plate of the heated roll.

[Comparative Example 1]

A staple fiber nonwoven fabric made of PET resin, with a fiber diameter of 4 $\mu$m and fiber lengths of 5 mm was subjected to calendering to obtain the desired thickness, porosity and compaction property, as shown in Table 1. The calendering was carried out at 23°C as ambient temperature, without any particular consideration for the fabric temperature.

[Comparative Example 2]

A nonwoven fabric was fabricated in the same manner as Example 10, except that the fabric temperature before calendering was 23°C as ambient temperature, as shown in Table 1, and the fabric was used as a support.

[Table 1]

| | Production conditions | | | | | | Support properties | | | | | | | | | | Electrical resistance |
|---|---|---|---|---|---|---|---|---|---|---|---|---|---|---|---|---|---|
| | Fiber material | Production method | Spinning temperature | Calender type | Calender temperature | Fabric temperature before calendering | Fiber diameter | Basis weight | Apparent density | Thickness | Porosity | Elastic recovery rate | Compressibility ratio | Tensile strength | Air-flow resistance | Aperture size | Electrical conductivity |
| | | | °C | | °C | °C | μm | g/m² | g/cm³ | μm | % | % | % | N/15 mm | kPa·s/m | μm | S/m |
| Example 1 | PET | SMS | 290 | Flat | 230 | 70 | 15/2.5/15 | 20 | 0.63 | 32 | 55 | 83 | 2.3 | 38 | 2.3 | 9.5 | $1.4 \times 10^{-3}$ |
| Example 2 | PET | SMS | 290 | Flat | 220 | 70 | 15/2.5/15 | 20 | 0.42 | 48 | 70 | 85 | 9.7 | 31 | 1.9 | 11.3 | $6.7 \times 10^{-3}$ |
| Example 3 | PET | SMS | 290 | Flat | 240 | 70 | 15/2.5/15 | 20 | 0.80 | 25 | 42 | 79 | 1.2 | 45 | 2.8 | 10.4 | $9.1 \times 10^{-3}$ |
| Example 4 | PET | SMS | 290 | Flat | 230 | 50 | 15/2.5/15 | 20 | 0.67 | 30 | 52 | 63 | 1.1 | 48 | 2.4 | 8.4 | $1.0 \times 10^{-3}$ |
| Example 5 | PET | SMS | 290 | Flat | 230 | 90 | 15/2.5/15 | 20 | 0.59 | 34 | 57 | 88 | 7.4 | 32 | 1.9 | 10.7 | $5.0 \times 10^{-2}$ |
| Example 6 | PET | SMS | 290 | Embossed | 230 | 70 | 15/2.5/15 | 20 | 0.27 | 73 | 80 | 95 | 15.6 | 27 | 0.8 | 9.1 | $3.1 \times 10^{-5}$ |
| Example 7 | PET | SMS | 290 | Flat | 230 | 70 | 15/2.5/15 | 12 | 0.67 | 18 | 52 | 75 | 1.9 | 18 | 0.3 | 15.2 | $1.3 \times 10^{-3}$ |
| Example 8 | PPS | SMS | 320 | Flat | 250 | 90 | 15/2.5/15 | 20 | 0.44 | 45 | 68 | 71 | 1.8 | 53 | 2.8 | 11.1 | $2.4 \times 10^{-3}$ |
| Example 9 | PET | Sheet making | - | Flat | 230 | 70 | 4 | 20 | 0.65 | 31 | 53 | 38 | 1.1 | 19 | 18.7 | 16.7 | $1.1 \times 10^{-5}$ |
| Example 10 | PET | S | 290 | Embossed | 230 | 70 | 15 | 12 | 0.23 | 52 | 83 | 93 | 38.0 | 23 | 0.8 | 42.2 | $1.3 \times 10^{-5}$ |
| Example 11 | PET | M | 290 | Flat | 100 | 70 | 2.5 | 20 | 0.65 | 31 | 53 | 61 | 1.2 | 8 | 22.4 | 4.8 | $1.9 \times 10^{-5}$ |

| | Production conditions | | | | | | Support properties | | | | | | | | | | Electrical resistance |
|---|---|---|---|---|---|---|---|---|---|---|---|---|---|---|---|---|---|
| | Fiber material | Production method | Spinning temperature | Calender type | Calender temperature | Fabric temperature before calendering | Fiber diameter | Basis weight | Apparent density | Thickness | Porosity | Elastic recovery rate | Compressibility ratio | Tensile strength | Air-flow resistance | Aperture size | Electrical conductivity |
| | | | °C | | °C | °C | μm | g/m² | g/cm³ | μm | % | % | % | N/15 mm | kPa·s/m | μm | S/m |
| Example 12 | PET | SMS | 290 | Flat | 230 | 70 | 15/0.3/15 | 20 | 0.63 | 32 | 55 | 81 | 1.1 | 32 | 15.3 | 6.6 | $1.0 \times 10^{-2}$ |
| Example 13 | PET | SM | 290 | Flat | 100 | 70 | 15/2.5 | 5 | 0.28 | 18 | 80 | 78 | 1.8 | 7 | 0.5 | 10.3 | $8.7 \times 10^{-2}$ |
| Comp. Example 1 | PET | Sheet making | - | Flat | 230 | 23 | 4 | 20 | 0.80 | 25 | 42 | 25 | 0.1 | 13 | 21.1 | 12.8 | $1.6 \times 10^{-7}$ |
| Comp. Example 2 | PET | S | 290 | Embossed | 230 | 23 | 15 | 12 | 0.16 | 73 | 88 | 28 | 63.2 | 48 | 1.9 | 37.5 | $3.2 \times 10^{-6}$ |

INDUSTRIAL APPLICABILITY

The solid electrolyte support of the invention allows a solid electrolyte sheet with low electrical resistance to be obtained in combination with an inorganic solid electrolyte such as a solid sulfide electrolyte or solid oxide electrolyte, or a polymer-based solid electrolyte, and is thus suitable for use as a member for an all-solid-state battery.

**Claims**

1.   A solid electrolyte support that includes a nonwoven fabric, wherein the elastic recovery rate of the support is 30 to 99%.

2.   The solid electrolyte support according to claim 1, wherein the porosity of the support is 30 to 95%.

3.   The solid electrolyte support according to claim 1 or 2, wherein the compressibility ratio of the support is 0.1 to 40%.

4.   The solid electrolyte support according to claim 1 or 2, wherein the nonwoven fabric includes synthetic fibers.

5.   The solid electrolyte support according to claim 4, wherein the synthetic fibers are polyester.

6.   The solid electrolyte support according to claim 1 or 2, wherein the thickness of the support under a load of 100 g/m$^2$ is 5 to 200 $\mu$m.

7.   The solid electrolyte support according to claim 1 or 2, wherein the nonwoven fabric includes fibers with fiber lengths of 51 mm or greater.

8.   The solid electrolyte support according to claim 1 or 2, wherein the basis weight of the support is 5 to 50 g/m$^2$.

9.   The solid electrolyte support according to claim 1 or 2, wherein the nonwoven fabric includes ultrafine fibers with fiber diameters of 0.1 to 5.0 $\mu$m.

10.   The solid electrolyte support according to claim 1 or 2, wherein the nonwoven fabric includes a layer containing ultrafine fibers with fiber diameters of 0.1 to 5.0 $\mu$m and a layer containing fibers with fiber diameters of greater than 5.0 $\mu$m and 30 $\mu$m or smaller.

11.   The solid electrolyte support according to claim 10, wherein the nonwoven fabric includes one layer containing ultrafine fibers with fiber diameters of 0.1 to 5.0 $\mu$m (layer I) and one layer containing fibers with fiber diameters of greater than 5.0 $\mu$m and 30 $\mu$m or smaller (layer II).

12.   The solid electrolyte support according to claim 1 or 2, wherein the nonwoven fabric is thermally bonded over the entire surface.

13.   The solid electrolyte support according to claim 1 or 2, wherein the nonwoven fabric includes a layer containing ultrafine fibers with fiber diameters of 0.1 to 5.0 $\mu$m (layer I) and a layer containing fibers with fiber diameters of greater than 5.0 $\mu$m and 30 $\mu$m or smaller (layer II), the elastic recovery rate of the support is 45 to 99%, and the compressibility ratio of the support is 0.1 to 9.7%.

14.   A solid electrolyte sheet which includes a solid electrolyte support according to claim 1 or 2 and a solid electrolyte.

15.   The solid electrolyte sheet according to claim 14, wherein the electrical conductivity of the solid electrolyte sheet is $1.0 \times 10^{-5}$ to $5.0 \times 10^{-1}$ s/m.

## INTERNATIONAL SEARCH REPORT

| International application No. |
| --- |
| **PCT/JP2022/017200** |

### A. CLASSIFICATION OF SUBJECT MATTER

*D04H 3/16*(2006.01)i; *H01B 1/06*(2006.01)i; *H01M 10/0562*(2010.01)i
FI:   H01B1/06 A; D04H3/16; H01M10/0562

According to International Patent Classification (IPC) or to both national classification and IPC

### B. FIELDS SEARCHED

Minimum documentation searched (classification system followed by classification symbols)

D04H3/16; H01B1/06; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2020/036055 A1 (FUJIFILM CORP.) 20 February 2020 (2020-02-20)<br>[0016]-[0019],[0037]-[0047] | 1-15 |
| A | JP 2017-183111 A (ASAHI KASEI KABUSHIKI KAISHA) 05 October 2017 (2017-10-05)<br>paragraphs [0012]-[0014] | 1-15 |
| A | JP 2009-230975 A (MITSUBISHI PAPER MILLS LTD.) 08 October 2009 (2009-10-08)<br>paragraphs [0012]-[0016] | 1-15 |

☐ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **08 June 2022** | **28 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/017200**

| Patent document cited in search report | | | Publication date (day/month/year) | Patent family member(s) | Publication date (day/month/year) |
|---|---|---|---|---|---|
| WO | 2020/036055 | A1 | 20 February 2020 | (Family: none) | |
| JP | 2017-183111 | A | 05 October 2017 | (Family: none) | |
| JP | 2009-230975 | A | 08 October 2009 | (Family: none) | |

Form PCT/ISA/210 (patent family annex) (January 2015)

**REFERENCES CITED IN THE DESCRIPTION**

**Patent documents cited in the description**

- JP 2006190627 A
- JP 2020054081 A
- JP 2016031789 A